# EUROPEAN PATENT SPECIFICATION

(11) **EP 2 327 610 B1**
(45) Date of publication and mention of the grant of the patent: **18.01.2012**
(21) Application number: 09425485.1
(22) Date of filing: 26.11.2009
(51) Int. Cl.: B62D 55/12

(54) **Track driven device for lawn-mower**
Schienenbetriebene Vorrichtung für Rasenmäher
Dispositif de chenilles pour tondeuse à gazon

(43) Date of publication of application: 01.06.2011
(73) Proprietor: Bernini, Fabrizio, 52021 Bucine - Arezzo (IT)
(72) Inventor: Bernini, Fabrizio, 52021 Bucine - Arezzo (IT)
(74) Representative: Lanzoni, Luciano

(56) References cited:
- WO-A1-2007/076653
- DE-U1-202007 012 629
- GB-A- 2 180 133
- GB-A- 2 230 414
- US-A- 2 238 347
- US-A- 2 535 254

## Description

The object of the present invention is a track-driven device for lawn-mower.

Self-propelling lawn-mowers are known to be provided with a pair of tracks to promote the advancement thereof over any type of ground. In particular, said tracks are usually mounted on automatic lawn-mowers able to operate autonomously on a grass surface to be cut.

Each track is mounted on a respective pair of chain pulleys mounted on the lawn-mower's case.

The rotary engagement between pulleys and track is made through slots of substantially rake-type formed on the inner face of the track and meshing with the teeth of the chain pulleys.

Disadvantageously, the above described engagement between chain pulleys and track has proved to be hardly reliable, inasmuch as the frequent interposition of grass, earth or debris in general, prevents a correct kinematic coupling thereof. The debris, in fact, become stacked within the interstices of adjacent teeth of the pulleys, thereby forming a solid and compact agglomerate which reduces the effective height of the teeth and hinders the meshing. Moreover, the very modest mass of the lawn-mower contributes to amplify this problem, inasmuch as the dynamic compressive action of the track's links on the pulleys' teeth is very limited and therefore insufficient for determining whatever action of detachment and/or removal of said agglomerates.

A direct consequence of this is an uncoupling between pulleys and track which turns into a skidding of the driving pulley or even a side slip off of the track, with the lawn-mower coming to a stop and requiring a technical intervention of track re-assembly.

A solution is known from document US2535254, which shows a garden tractor having a frame comprised of two longitudinal stringers, each provided with a couple of sprocket wheels around which a common endless chain passes.

Precisely, each wheel has a plurality of teeth that can be coupled with respective opening of the chain during the movement of the tractor.

In this context, the technical task on which the present invention is based is to propose a track-driven lawn-mower able to overcome the above indicated drawbacks of the prior art.

In particular, the object of the present invention is Lo provide a track-driven lawn-mower exhibiting high reliability on any type of ground.

The indicated technical task and specified purposes are substantially achieved by means of a track-driven lawn-mower having the technical characteristics set forth in claim 1.

Further characteristics and advantages of the present invention will appear more clearly by the indicative, and thus non-limitative, description of a preferred, but non-exclusive, embodiment of a track-driven lawnmower, as illustrated in the accompanying drawings, wherein:
- Fig. 1 is a perspective view of a track-driven lawn-mower according to the present invention;
- Fig. 2 is a perspective view of the device of Fig. 1 with some parts taken away to highlight others;
- Fig. 3 is a representation partially in front view and partially in section view taken on line III-III of Fig. 1 of a portion of the device shown in Fig. 1;
- Fig. 4 is a representation partially in front view and partially in section view of the part of the device shown in Fig. 3, according to a modified embodiment; an
- Fig. 5 is an enlarged view partially in front view and partially in section view of a detail of the device shown in Fig. 1.

According to the annexed figures, a track-driven device for lawn-mowers according to the present invention is represented in its entirety.

The device 1 comprises a case 2, preferably of metal, on which at least two end pulleys 3, 4 are rotatively mounted for rotation about parallel axes "X", "Y".

The case 2 can be stably associated in a known manner with the frame (not shown) of a lawn-mower, for example an automatic lawn-mower for domestic use able to operate autonomously over a grass surface to be cut.

In particular, two devices 1 can be mounted on said lawn-mower's frame on opposite sides thereof to provide a dual support for the lawn-mower.

Disposed on the two pulleys 3, 4 is a track 5, ring-like closed over said two pulleys 3, 4. The track 5, preferably made of rubber or nylon-rubber, comprises a plurality of links 6 hinged to each other in sequence by means of respective (preferably metal) connecting pins 7 allowing the links 6 to rotate relative to each other so as to give the track 5 the capacity of partially winding up around the pulleys 3, 4 and moving forward in a closed-loop path.

Each link 6 exhibits preferably a plate-shaped portion 6a, hinged to adjacent links 6 through respective connecting pins 7.

Preferably, moreover, each link 6 exhibits a relief 6b which extends transversely to the plate-shaped portion 6a to penetrate the ground upon the advancement of the law-mower and forming therefore a firm anchorage of track 5 to the ground.

Advantageously, each plate-shaped portion 6a exhibits an opening or slot 8 in correspondence of a link articulated to an adjacent plate-shaped portion 6a, said slot 8 being able to expose a portion of the respective connecting pin 7 having preferable cylindrical shape.

The remaining part of the cylindrical pin 7 may be left fully concealed within corresponding terminal portions, connected to each other, of one or the other plate-shaped portion 6a.

Each of said pulleys 3, 4 exhibits a central portion 9 where a plurality of preferably or substantially radial projections 10 extend away from the axes of rotation "X", "Y" of pulleys 3, 4.

The projections 10 are angularly distributed about the axes of rotation "X", "Y" of pulleys 3, 4.

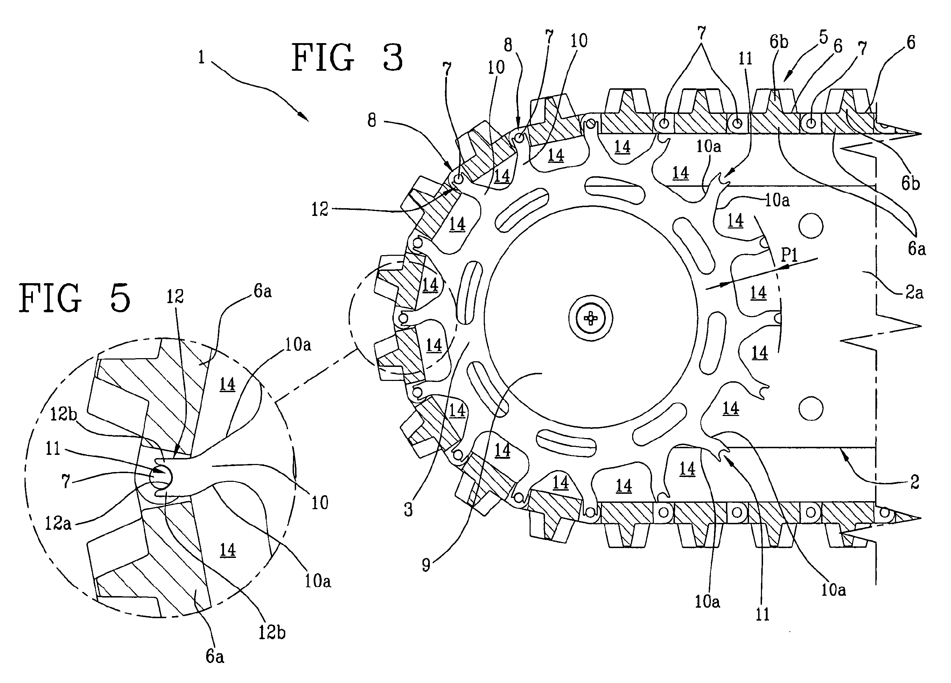

According to a first embodiment shown in Fig. 3, the projections 10 are arranged in pairs in such a way that the pairs of projections 10 are angularly equidistant about the axes of rotation "X", "Y" of pulleys 3, 4. Advantageously, each of said projections 10 exhibits two side flanks 10a which develop away from the central portion 9 of pulleys 3, 4 and lead to and end portion having radial or substantially radial direction opposite to the axes of rotation "X", "Y" of pulleys 3, 4. The said end portion 11 of projection 10 defines a support portion able to engage the track 5 and having, in particular, such a shape as to go into one of said track's openings or slots 9 and to engage said exposed portion of the connecting pin 7.

Preferably, the support portions 11 are substantially counter-shaped at least partially with respect to said exposed portion of the connecting pin 7.

In the illustrated preferred embodiment of the invention (Fig. 5), each of said support portions 11 comprises a fork 12 having a front surface 12a able to abut against the said exposed portion of the connecting pin 7, and two side lugs 12b able to partially embrace the connecting pin 7 on opposite sides, thereby allowing the fork 12 to firmly include the connecting pin 7.

To allow each fork 12 to engage with a respective connecting pin 7 of track 5, the pulleys 3, 4 exhibit forks 12 distributed angularly equidistant about the axes of rotations "X", "Y".

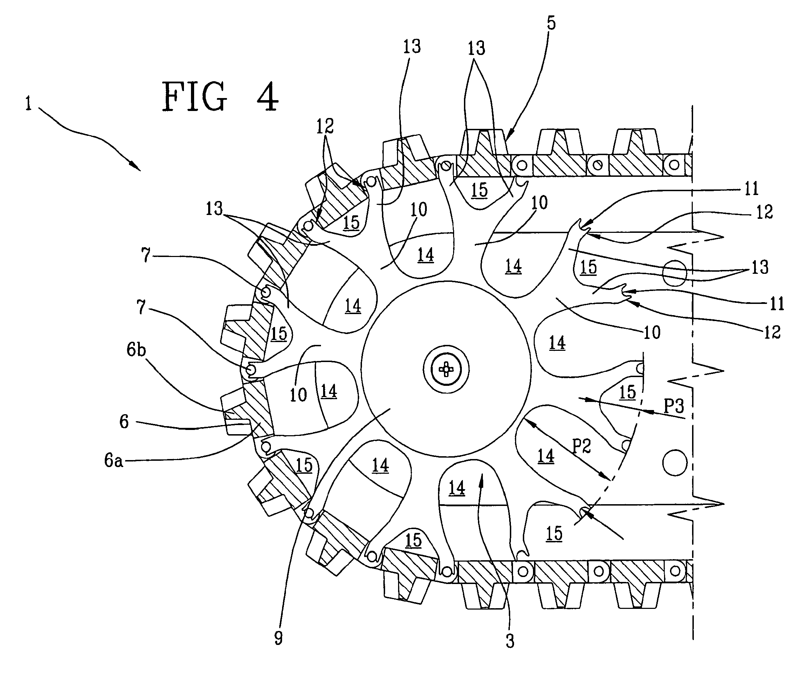

According to a second embodiment, as shown in Fig. 4, the projections 10 are spaced apart by equal angles about the axes "X", "Y" of pulleys 3, 4, and each projection 10 exhibits two forks 12 of a type above described.

In greater detail, each projection 10 ends up with two arms 13 symmetrically disposed with respect to the projection 10 to define a symmetric branching or bifurcation 13 of same projection 10. Each arm 13 exhibits, at its external end, a respective fork 12 so as to have the two forks 12 symmetrically disposed relative to the projection 10 which support them.

Also in this case, the forks 12 result distributed angularly equidistant about the axes of rotations "X", "Y".

Advantageously, the projections 10 have a prevalent direction of radial or substantially radial development away from the axes of rotations "X", "Y" of respective pulleys 3, 4. In other words, the projections 10 are shaped as a dial on the central portion 9 of respective pulleys 3, 4.

In this way, advantageously, there is defined, between two adjacent projections 10, a space 14 extending from the central portion 9 of pulleys 3, 4 to the forks 12. Such space may advantageously provide a site for holding agglomerates of earth, mud, grass or more in general of debris, which do not tend therefore to reach the forks 12 and to nullify the correct coupling between the forks 12 and the connecting pins 7.

In the embodiment shown in Fig. 4, moreover, further peripheral spaces 15 are formed delimited laterally by the two arms 13 associated with a same projection 10. The said peripheral spaces 15 extend from the branchings of projections 10 (defining the initial part of arms 13) to the forks 12.

Also the peripheral spaces 15 contribute to the retention of agglomerates of earth, mud, grass or more in general of debris, thereby preventing them to reach the forks 12 and nullify the correct coupling between the forks 12 and the connecting pins 7.

According to an exemplary embodiment of the type shown in Fig. 3, the space 14 has a maximum depth "P1" of 10 to 20 mm, and preferably of about 15 mm. Considering a maximum external diameter of pulleys 3, 4, the said space 14 is in a ratio of about 11,5% thereto. According to an exemplary embodiment of the type shown in Fig. 4, the space 14 has a maximum depth "P2" of 30 to 45 mm, and preferably of about 37,8 mm. Considering a maximum external diameter of pulleys 3, 4, the said space 14 is in a ratio of about 29,5% thereto.

Moreover, the peripheral space 15 has a maximum depth "P3" of 8 to 16 mm, and preferably of about 12,6 mm. Considering a maximum external diameter of pulleys 3, 4, the said space 15 is in a ratio of about 9,8% thereto.

Preferably, the device 1 comprises four pulleys 3, 4 arranged into two pairs, each of which rotates about a respective axis of rotation "X", "Y".

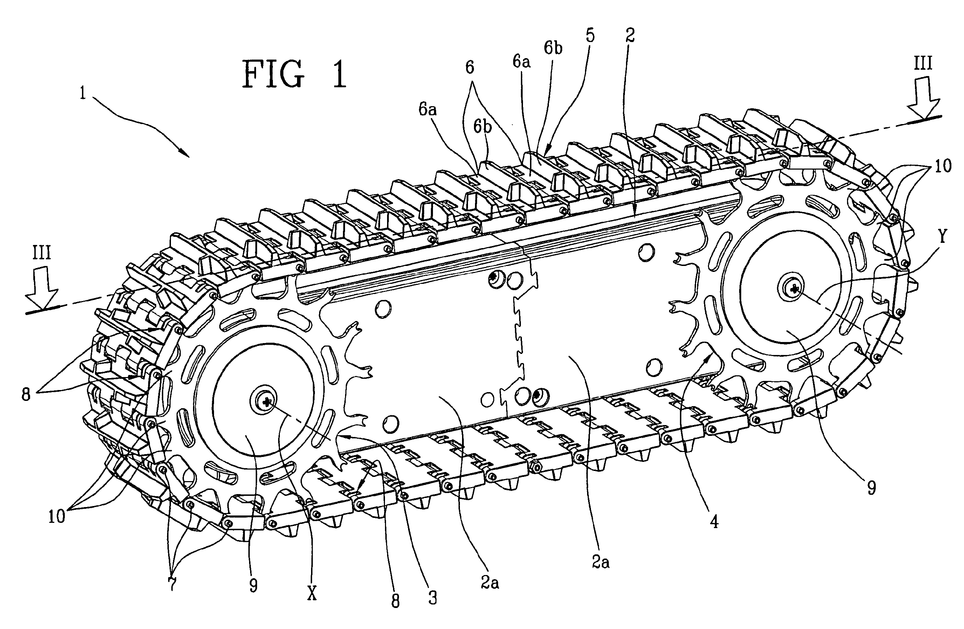

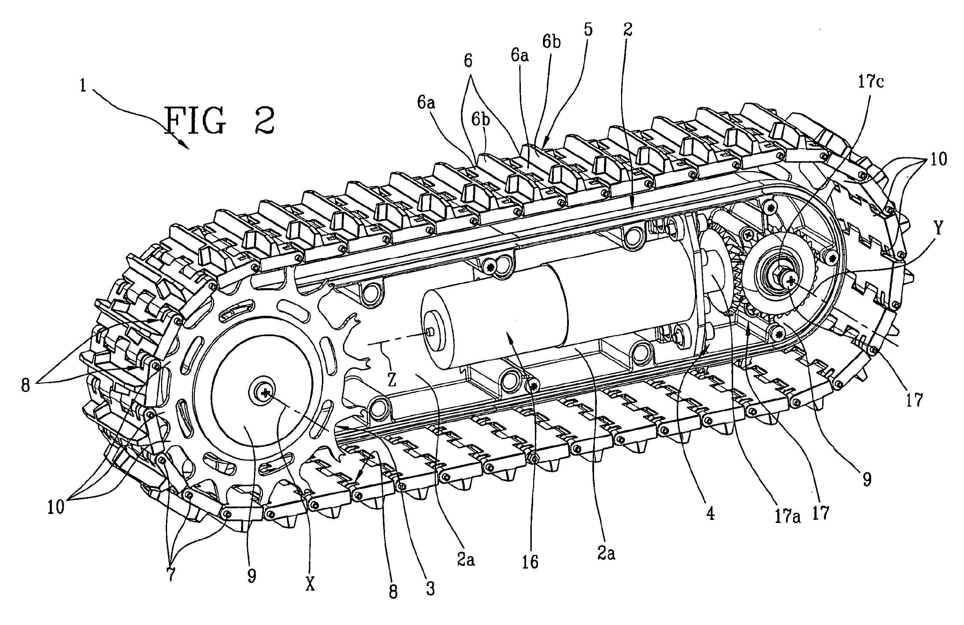

The two pulleys 3, 4 of each pair are disposed on opposite sides of case 2 (only one of them being visible in Figs. 1 and 2) and rotate coaxially to each other.

In such configuration, the pulleys 3, 4, disposed on a same side of case 2, engage with the track 5 along a respective closed race so as to define two different races on opposite sides of case 2 to symmetrically support the latter on the ground.

Preferably, both pulleys 3, 4 of a same pair are identical to one another.

More preferably, all the pulleys 3, 4 are identical to each other.

Preferably, the pulleys 3, 4 are made of steel. Preferably, moreover, the pulleys 3, 4 exhibit a prevalent development plane, and more preferably are made from a steel sheet having a thickness ranging from 2.0 mm to 4.0 mm.

According to the above, at least one of said two pairs of pulleys 3, 4, associated with one of said two axes "X", "Y", is motorized. This is obtained by providing an electric motor 16 connected to an electric power generator (not shown) such as a battery or an alternator connected in turn to an internal combustion engine.

Advantageously, the electric motor 16 is fully held inside the case.

Preferably, the electric motor 16 (which is of rotary type) is disposed longitudinally inside the case 2. In other words, the electric motor 16 has an axis of rotation "Z" extending along the case 2 transversely and preferably perpendicularly to said axes of rotation "X", "Y" of pulleys 3, 4.

The transmission of motion between the electric motor 16 and said driving pulleys 3, 4 is made by means of bevel gears 17 meshing with each other (Fig. 2).

The meshing of bevel gears 17 exhibits an entry axis 17a solid to an exit axis (and thus to the rotor) of electric motor 16, and two exit shafts 17b (only one of them being visible in Fig. and 2) on which suitable slotted sections 17c are formed for the rotational coupling with respective pulleys 3, 4.

Preferably, the case 2 has a box-like structure and is provided with at least one removable closing lid 2a to allow access to the electric motor 16 and underlying bevel gears 17.

In the illustrated embodiment, the case 2 is provided with two coplanar half-lids 2a arranged side-by-side and associated with respective parts of case 2. In particular, the half-lids 2a exhibit a line of mutual separation which is substantially perpendicular to a joining plane of said axes "X", "Y" of pulleys 3, 4. This makes it possible to remove only one of the half-leads 2a as required without unnecessarily disassembling the other.

The present invention achieves the proposed object by overcoming the drawbacks of the prior art.

The provision of said spaces, due to the particular shape of the pulleys, allows separating the debris accumulation regions (debris which collect in said spaces) from the regions of engagement between the pulleys and tracks (forks).

The forks have a surface of contact with the track quite moderate and limited to the minimum necessary for grasping and dragging a respective track's connecting pin, whereas the spaces have a wide extension and are separated from the forks.

This is of fundamental importance inasmuch as the dynamic actions exchanged between the pulleys and the track, owing to the reduced mass of the lawn-mower, do not contribute efficiently to the detachment and automatic removal of debris which, otherwise would become retained between pulleys and track as it occurs in the prior art.

According to a further advantageous aspect of the invention, the motor fully housed within the case results completely isolated from the outside and, therefore, no component of the motor or transmission is exposed to debris, dirt or other.

## Claims

1. Track-driven device for lawn-mowers, comprising:
- a case (2) able to be firmly associated with the frame of a lawn-mower;
- a first pair of pulleys (3, 4) rotatively mounted on the case (2) to rotate about respective axes of rotation (X, Y) parallel to each other; each of said pulleys (3, 4) exhibiting a central portion (9) and a plurality of radiale projections (10) expending away from said central portion (9) and angularly distributed around the respective axes of rotation (X, Y);
- a track (5) disposed along a closed line around said pulleys (3, 4) ;
said projections (10) being engageable with said track (5) for moving same track (5) forward along said closed line;
each of said projection (10) exhibiting a pair of side flanks (10a) and an end portion (11) extending between the side flanks (10a) in a substantially radial direction opposite to the axes of rotation (X, Y) of pulleys (3, 4), said end portion (11) defining a support portion (11) able to engage the track (5) to move it forward along said closed line;
**characterized in that** said case (2) has a box-like structure and is provided with at least one removable closing lid (2a) allowing access inside said case (2).

2. Device according to claim 1, wherein said track (5) comprises a plurality of links (6) hinged to each other in sequence by means of respective connecting pins 7, and wherein each support portion (11) is counter-shaped at least partially with respect to an outer profile of one of said connecting pins (7) to support said track (5) at a peripheral end of said projections (10) so that a collecting space (14) is formed between two successive projections (10).

3. Device according to claim 1 or 2, wherein each link (6) exhibits, in proximity of a region of junction with an adjacent link (6), a slot (8) provided for exposing at least partially a respective one of said connecting pins (7), and wherein said support portion (11) is insertable into said slot (8) to abut against the said exposed portion of the connecting pin (7).

4. Device according to any of the preceding claims, wherein each of said support portions (11) comprises a fork (12) having a front surface (12a) and two side lugs (12b) laterally disposed opposite to said front surface (12a).

5. Device according to any of the preceding claims, wherein each projection (10) exhibits, extending away from the axes of rctation (X, Y) of pulleys (3, 4), a peripheral bifurcation defined by two arms (13) each of which exhibits at one end thereof, one of said support portions (11), said two arms (13) delimiting a collecting peripheral space (15) therebetween.

6. Device according to any of the preceding claims, wherein at least one of said pulleys (3, 4) is a driving pulley (4) and wherein said device (1) further comprises an electric motor (16) for driving at least one of said pulleys (3, 4), said electric motor (16) being mounted on the case (2) and delimited by overall dimensions external of said case (2).

7. Device according to claim 6, wherein said electric motor (16) is a rotary motor and has an axis of rotation (Z) transversal and preferably perpendicular to said axes of rotation (X, Y) of pulleys (3, 4), and wherein said device (1) further comprises meshing bevel gears (17) interposed between said electric motor 16) and said driving pulley (4).

8. Device according to claim 6, wherein said case (2) is provided with two removal half-lids (2a), preferably complementary to and separated from each other in correspondence of a junction line transversal to a plane passing through the axes of rotation ("X", "Y") of said pulleys (3, 4).

9. Device according to any of the preceding claims, further comprising a second pair of pulleys (3, 4), wherein the two pulleys (3, 4) of each pair can rotate about a same axis of rotation (X, Y) and disposed on opposite sides of said case (2) so as to engage the track (5) in correspondence of different races disposed on opposite sides of the case (2).

10. Lawn-mower comprising at least one track-driven device (1) according to any of the preceding claims.

## Patentansprüche

1. Vorrichtung mit Gleiskettenantrieb für Rasenmäher, Folgendes beinhaltend:
- ein Gehäuse (2), das fest mit dem Rahmen eines Rasenmähers verbunden werden kann;
- ein erstes Paar Scheiben (3, 4), die drehbar auf dem Gehäuse (2) montiert sind, so dass sie sich um entsprechende zueinander parallele Drehachsen (X, Y) drehen; wobei jede der Scheiben (3, 4) einen mittleren Abschnitt (9) und mehrere radiale Vorsprünge (10) aufweist, die sich von diesem mittleren Abschnitt (9) wegführend erstrecken und winklig um die entsprechenden Drehachsen (X, Y) verteilt sind;
- eine Gleiskette (5), die entlang einer geschlossenen Linie um die Scheiben (3, 4) gelegt ist;
wobei die Vorsprünge (10) mit der Gleiskette (5) in Eingriff gebracht werden können, um die Gleiskette (5) entlang der geschlossnen Linie vorwärts zu bewegen;
wobei jeder der Vorsprünge (10) ein Paar seitlicher Flanken (10a) und einen Endabschnitt (11) aufweist, der sich zwischen den seitlichen Flanken (10a) in einer im Wesentlichen radialen Richtung entgegengesetzt der Drehachsen (X, Y) der Scheiben (3, 4) erstreckt, wobei der Endabschnitt (11) einen Auflageabschnitt (11) bildet, der in Eingriff mit der Gleiskette (5) gelangen kann, um diese entlang der geschlossenen Linie vorwärts zu bewegen;
**dadurch gekennzeichnet, dass** das Gehäuse (2) einen kastenartigen Aufbau aufweist und mit mindestens einem abnehmbaren Verschlussdeckel (2a) versehen ist, der den Zugang zum Gehäuse (2) ermöglicht.

2. Vorrichtung nach Anspruch 1, worin die Gleiskette (5) mehrere Glieder (6) beinhaltet, die aufeinanderfolgend durch entsprechende Verbindungszapfen (7) gelenkig miteinander verbunden sind, und worin jeder Auflageabschnitt (11) zumindest teilweise im Verhältnis zu einem äußeren Profil eines der Verbindungszapfen (7) gegengleich geformt ist, um die Gleiskette (5) an einem peripheren Ende der Vorsprünge (10) derart zu tragen, dass ein Sammelraum (14) zwischen zwei aufeinanderfolgenden Vorsprüngen (10) gebildet wird.

3. Vorrichtung nach Anspruch 1 oder 2, worin jedes Glied (6) in der Nähe eines Verbindungsbereiches mit einem angrenzenden Glied (6) einen Schlitz (8) aufweist, der dazu dient, zumindest teilweise einen der Verbindungszapfen (7) freizulegen, und worin der Auflageabschnitt (11) in den Schlitz (8) eingeführt werden kann, um gegen den freiliegenden Abschnitt des Verbindungszapfens (7) anzuliegen.

4. Vorrichtung nach einem der vorgehenden Ansprüche, worin jeder der Auflageabschnitte (11) eine Gabel (12) beinhaltet, die eine vordere Oberfläche (12a) und zwei seitliche Ansätze (12b) aufweist, die einander gegenüberliegend seitlich der vorderen Oberfläche (12a) angeordnet sind.

5. Vorrichtung nach einem der vorgehenden Ansprüche, worin jeder Vorsprung (10) eine von den Drehachsen (X, Y) der Scheiben (3, 4) wegführende periphere Gabelung aufweist, die von zwei Armen (13) gebildet wird, von denen jeder an einem Ende einen der genannten Auflageabschnitte (11) aufweist, wobei die zwei Arme (13) einen dazwischen liegenden peripheren Sammelraum (15) begrenzen.

6. Vorrichtung nach einem der vorgehenden Ansprüche, worin zumindest eine der Scheiben (3, 4) eine Antriebsscheibe (4) ist und worin die Vorrichtung (1) ferner einen Elektromotor (16) für den Antrieb zumindest einer der Scheiben (3, 4) beinhaltet, wobei der Elektromotor (16) auf dem Gehäuse (2) montiert und in den Außenabmessungen des Gehäuses (2) enthalten ist.

7. Vorrichtung nach Anspruch 6, worin der Elektromotor (16) ein Drehmotor ist und eine Drehachse (Z) aufweist, die quer und vorzugsweise perpendikular zu den Drehachsen (X, Y) der Scheiben (3, 4) ausgerichtet ist, und worin die Vorrichtung (1) ferner miteinander kämmende Kegelzahnräder (17) beinhaltet, die zwischen dem Elektromotor (16) und der Antriebsscheibe (4) angeordnet sind.

8. Vorrichtung nach Anspruch 6, worin das Gehäuse (2) mit zwei abnehmbaren Halbdeckeln (2a) versehen ist, die vorzugsweise komplementär zueinander und entlang einer Verbindungslinie getrennt voneinander sind, die quer zu einer durch die Drehachsen ("X", "Y") der Scheiben (3, 4) geführten Ebene ausgerichtet ist.

9. Vorrichtung nach einem der vorgehenden Ansprüche, ferner beinhaltend ein zweites Paar Scheiben (3, 4), worin die zwei Scheiben (3, 4) jedes Paares um dieselbe Drehachse (X, Y) drehen können und auf einander gegenüberliegenden Seiten des Gehäuses (2) derart angeordnet sind, dass sie mit der Gleiskette (5) an verschiedenen Laufflächen in Eingriff gelangen, die auf entgegengesetzten Seiten des Gehäuses (2) angeordnet sind.

10. Rasenmäher, der zumindest eine Vorrichtung mit Gleiskettenantrieb (1) nach einem der vorhergehenden Ansprüche beinhaltet.

## Revendications

1. Un dispositif de chenilles pour tondeuse à gazon, comprenant:
- un carter (2) associé solidement au châssis de la tondeuse;
- un premier couple de poulies (3, 4) montées rotativement sur le carter (2) de manière à tourner autour de leurs axes de rotation (X, Y) respectifs, parallèles entre eux; chacune desdites poulies (3, 4) présentant une portion centrale (9) et une pluralité de saillies radiales (10) s'étendant vers l'extérieur de ladite portion centrale (9) et distribuées angulairement autour de leurs axes de rotation respectifs (X, Y);
- une chenille (5) disposée le long d'une ligne fermée autour des dites poulies (3, 4) dont les saillies (10) peuvent s'engager dans ladite chenille (5) de manière à entraîner ladite chenille (5) en avant le long de ladite ligne fermée;
chacune desdites saillies (10) présentant un couple de flancs (10a) et une portion terminale (11) s'étendant entre les flancs (10a) dans une direction essentiellement radiale opposée aux axes de rotation (X, Y) des poulies (3, 4), ladite portion terminale (11) définissant une portion de support (11) pouvant entrer en prise avec ladite chenille pour l'entraîner en avant le long de ladite ligne fermée;
**caractérisé en ce que** ledit carter (2) a une structure en forme de boîte et présente au moins un couvercle de fermeture amovible (2a) qui s'ouvre pour permettre l'accès à l'intérieur dudit carter (2).

2. Le dispositif selon la revendication 1, **caractérisé en ce que** ladite chenille (5) comprend une pluralité de maillons (6) articulés les uns aux autres en succession par l'intermédiaire d'axes de liaison (7) et **en ce que** chaque portion de support (11) présente, tout du moins partiellement, un profil inverse par rapport à un profil extérieur de l'un desdits axes de liaison (7) pour soutenir ladite chenille (5) à une extrémité périphérique desdites saillies (10) de manière à former un espace collecteur (14) entre deux saillies (10) successives.

3. Le dispositif selon la revendication 1 ou 2, **caractérisé en ce que** chaque maillon (6) présente, à proximité de la zone de jonction avec le maillon adjacent (6), une fente (8) prévue pour exposer, au moins partiellement, l'un desdits axes de liaison (7) respectifs et **en ce que** ladite portion de support (11) peut pénétrer dans ladite fente (8) et buter contre ladite portion exposée de l'axe de liaison (7).

4. Le dispositif selon l'une quelconque des revendications précédentes, **caractérisé en ce que** chacune desdites portions de support (11) comprend une fourche (12) présentant une surface frontale (12a) et deux oreilles (12b) disposées latéralement en face de ladite surface frontale (12a).

5. Le dispositif selon l'une quelconque des revendications précédentes, **caractérisé en ce que** chaque saillie (10) présente, s'éloignant des axes de rotation (X, Y) des poulies (3, 4), une bifurcation périphérique définie par deux bras (13), lesquels présentent à l'une de leur extrémité respective l'une desdites portions de support (11), lesdits deux bras (13) délimitant un espace collecteur (15) périphérique.

6. Le dispositif selon l'une quelconque des revendications précédentes, **caractérisé en ce qu'**au moins l'une desdites poulies (3, 4) est une poulie motrice (4) et **en ce que** ledit dispositif (1) comporte également un moteur électrique (16) pour l'actionnement d'au moins l'une desdites poulies (3, 4), ledit moteur électrique (16) étant monté sur le carter (2) et délimité par l'encombrement externe dudit carter (2).

7. Le dispositif selon la revendication 6, **caractérisé en ce que** ledit moteur électrique (16) est un moteur rotatif et possède un axe de rotation (Z) transversal, de préférence perpendiculaire auxdits axes de rotation (X, Y) des poulies (3, 4), et **en ce que** ledit dispositif (1) comporte également des roues coniques (17) d'engrenage situées entre ledit moteur électrique (16) et ladite poulie motrice (4).

8. Le dispositif selon la revendication 6, **caractérisé en ce que** ledit carter (2) est doté de deux demi-couvercles (2a) amovibles, de préférence complémentaires et séparés l'un de l'autre au niveau d'une ligne de jonction transversale à un plan passant par les axes de rotation («X», «Y») desdites poulies (3, 4).

9. Le dispositif selon l'une quelconque des revendications précédentes, comprenant également un second couple de poulies (3, 4), **caractérisé en ce que** lesdites poulies (3, 4) de chaque couple peuvent tourner autour du même axe de rotation (X, Y) et sont situées sur deux côtés opposés dudit carter (2) de manière à s'engager dans la chenille (5) en correspondance de différentes pistes disposées sur deux côtés opposés dudit carter (2).

10. La tondeuse à gazon comprenant au moins un dispositif de chenilles (1) selon l'une quelconque des revendications précédentes.
